# FASCICULE DE BREVET EUROPEEN

(11) **EP 2 145 750 B1**
(45) Date de publication et mention de la délivrance du brevet: **06.01.2016**
(21) Numéro de dépôt: 09305674.5
(22) Date de dépôt: 13.07.2009
(51) Int. Cl.: B29C 65/64

(54) **Procédé de montage d'une pièce métallique dans une pièce en matériau composite**
Montageverfahren eines Metallteils in ein Teil aus Verbundwerkstoff
Method for mounting a metal part in a part made from composite material

(30) Priorité: 16.07.2008 FR 0854825
(43) Date de publication de la demande: 20.01.2010
(73) Titulaire: SAS Capaero, 33550 Capian (FR)
(72) Inventeur: Samenayre, Jacques, 33200 Bordeaux (FR); Bruel, François, 31270 Cugnaux (FR)
(74) Mandataire: Fantin, Laurent

(56) Documents cités:
- EP-A1- 0 511 843
- EP-A2- 0 332 069
- FR-A1- 2 668 216
- GB-A- 2 435 317
- BIHAN A. ET COUTURIER D.: "Etude de résines thermodurcissables, et d'un système catalytique encapsulé = A study of the polymerization of thermosetting polymers, and of a microencapsulated peroxide curing agent" TRAVAUX UNIVERSITAIRES - THÈSE NOUVEAU DOCTORAT, UNIVERSITÉ DE LILLE 1, [Online] 1998, XP002513571 Extrait de l'Internet: URL:http://cat.inist.fr/?aModele=afficheN& cpsidt=187657> [extrait le 2009-02-04]

## Description

La présente invention est relative à un procédé de montage d'une pièce métallique dans une pièce en matériau composite, appartenant notamment à un sous-ensemble d'aéronef.

Par aéronef, on entend un avion, un hélicoptère, tout appareil aérodyne capable d'évoluer au sein de l'atmosphère terrestre, ou tout véhicule spatial.

Un aéronef comprend de nombreuses pièces formant différents sous-ensembles assemblés entre eux.

Ces pièces et ces sous-ensembles sont solidarisés entre eux par l'intermédiaire de différentes liaisons, rigides ou autorisant certains degrés de liberté.

Certains de ces sous-ensembles sont soumis à d'importantes contraintes mécaniques et à un grand nombre de cycles d'utilisation sur la durée de vie d'un aéronef.

Par exemple, un train d'atterrissage d'un avion est généralement composé de nombreuses pièces et sous-ensembles dont la cinématique permet l'extension/rétraction dudit train en dehors/dedans d'une case prévue à l'intérieur du fuselage ou des ailes. Cet ensemble cinématique, des essieux supportant les roues jusqu'au vérin de manoeuvre, doit supporter et amortir de nombreuses fois l'impact d'atterrissage.

Par conséquent, la conception des différentes pièces et la mise en oeuvre des liaisons entre lesdites pièces participant à l'assemblage de ces sous-ensembles particulièrement sollicités nécessitent l'utilisation de matériaux résistants, fabriqués et usinés avec une grande précision et de procédés optimisés ne laissant aucun paramètre au hasard.

Cependant, malgré les améliorations réalisées dans la modélisation du comportement des matériaux et des liaisons entre pièces et l'élaboration de nouveaux matériaux, certains composants et certaines liaisons s'endommagent et doivent être remplacées lors des opérations de maintenance, parfois pour réparation parfois par précaution en prévision de la fatigue d'un matériau ou de l'usure d'une surface de contact.

Différents procédés de l'art antérieur ont donc été élaborés afin d'améliorer les caractéristiques mécaniques et d'allonger la durée de vie des pièces et des liaisons des sous-ensembles d'aéronef.

On peut citer par exemple les liaisons comprenant au moins un alésage réalisé dans une pièce.

Un premier procédé de l'art antérieur visant à améliorer les caractéristiques mécaniques du matériau autour d'un alésage d'une pièce métallique repose sur la création de contraintes résiduelles de compression autour dudit alésage, ce qui permet d'augmenter la durée de vie en fatigue et la résistance à la corrosion.

Plus précisément, ce premier procédé connu sous la dénomination de «cold-working » consiste en un écrouissage à froid de la matière obtenu à l'aide d'un brunissoir et d'une bague fendue. Ladite bague fendue est retirée après le passage du brunissoir et le repoussage de la matière, puis l'alésage est réalésé pour une mise à la côte finale.

Il existe également d'autres procédés d'expansion à froid tels que l'expansion sans bague avec brunissoir fendu, ou également par poinçonnage.

Un deuxième procédé de l'art antérieur, aussi bien utilisé en fabrication qu'en maintenance, consiste à mettre en place de manière permanente par expansion à froid une bague métallique dans un alésage d'une pièce métallique.

Plus exactement, ce deuxième procédé, dit baguage par expansion à froid consiste à :
- expanser ladite bague métallique dans l'alésage à l'aide d'un brunissoir de manière à introduire des contraintes résiduelles de compression dans le matériau métallique autour de l'alésage, et,
- laisser ladite bague métallique dans l'alésage de façon à créer une forte interférence mécanique, c'est-à-dire un serrage, les contraintes résiduelles de compression procurant au montage de la bague une résistance élevée à l'arrachement par traction/compression et rotation.

Bien entendu, la bague métallique peut ensuite être réalésée à une côte précise.

La modélisation par éléments finis du comportement des matériaux métalliques autorisant des simulations très proches de la réalité, les paramètres de réalisation de ces deux procédés de l'art antérieur sont parfaitement connus et ajustés.

Toutefois, bien qu'il soient très utilisés jusqu'à aujourd'hui, ces deux procédés de l'art antérieur permettent uniquement d'améliorer les caractéristiques mécaniques et d'allonger la durée de vie d'une liaison comportant un alésage réalisé dans une pièce métallique.

Hors, déjà actuellement et encore plus à l'avenir, parmi les pièces secondaires et même les pièces primaires de l'aéronef, soit des pièces appartenant à la structure de l'aéronef, de plus en plus de pièces en matériau composite viennent remplacer des pièces en matériau métallique dans les sous-ensembles d'aéronef.

Il se pose donc la problématique de renforcer et de garantir des possibilités de réparation des liaisons comportant un alésage dans une pièce en matériau composite d'un sous-ensemble d'aéronef, y compris dans une pièce appartenant à la structure de l'aéronef et susceptible d'être fortement sollicitée.

Un procédé connu de l'art antérieur et répondant à cette problématique prévoit de renforcer un alésage réalisé dans une pièce en matériau composite en montant une bague métallique dans ledit alésage.

Selon ce procédé, le montage desdites bagues métalliques s'effectue au moyen d'un adhésif appliqué sur la paroi extérieure de ladite bague avant introduction dans ledit alésage.

Le scellement d'une bague métallique au moyen d'un adhésif fournit une bonne résistance aux efforts d'arrachement, mais il ne peut être considéré comme un procédé de montage conduisant à des performances durables et suffisamment homogènes.

De plus, l'application de l'adhésif sur la paroi extérieure de la bague juste avant son montage et la procédure de collage sont dépendantes de l'opérateur, la manipulation étant délicate.

Une autre solution de l'art antérieur prévoit d'insérer la bague métallique par co-cuisson lors de la réalisation de la pièce en matériau composite, cette solution entraîne des procédures de mise en oeuvre coûteuses et délicates.

Aussi, la présente invention vise à pallier les inconvénients de l'art antérieur en proposant un procédé de montage d'une pièce métallique dans une pièce en matériau composite, notamment d'un sous-ensemble d'aéronef, susceptible de conduire à des performances homogènes et à une facilité de mise en oeuvre tout en offrant une résistance aux efforts d'arrachement, en traction/compression et en rotation, et une durée de vie supérieure à celle des procédés de montage de l'art antérieur.

A cet effet, l'invention a pour objet un procédé de montage d'une pièce métallique dans une pièce en matériau composite, appartenant notamment à un sous-ensemble d'aéronef, ladite pièce métallique comprenant au moins une partie creuse et comprenant une paroi intérieure de forme identique à son contour extérieur, ladite paroi intérieure et ledit contour extérieur étant séparés par l'épaisseur E de la partie, ladite partie étant pré-enduite de colle et ladite pièce en matériau composite comprenant au moins un logement de réception de profil intérieur conjugué au contour extérieur de la partie de la pièce métallique, caractérisé en ce que le procédé de montage prévoit de réaliser une expansion de la paroi intérieure de la partie entraînant une expansion de son contour extérieur et déterminant les efforts d'expansion appliqués par la partie contre la paroi du logement dans le plan de stratification du matériau composite, le logement de réception et la partie de la pièce métallique étant disposés selon un axe longitudinal sensiblement perpendiculaire au plan de stratification du matériau composite de façon que les efforts issus de l'expansion soient dans ledit plan de stratification.

Ainsi, l'invention s'oppose à une idée préconçue selon laquelle la réalisation d'une liaison entre une pièce métallique et une pièce en matériau composite ne peut utiliser une étape d'expansion de ladite pièce métallique dans un logement de ladite pièce en matériau composite sans risquer de la détériorer et de diminuer la qualité de l'assemblage.

D'autres caractéristiques et avantages ressortiront de la description qui va suivre de l'invention, description donnée à titre d'exemple uniquement, en regard des dessins annexés sur lesquels :
- les figures 1A, 1B et 1C représentent schématiquement trois différents modes de réalisation du montage d'une pièce métallique dans une pièce en matériau composite réalisés grâce au procédé selon l'invention,
- les figures 2, 3A et 3B représentent un mode de réalisation préféré du montage d'une bague métallique dans un alésage d'une pièce en matériau composite grâce au procédé selon l'invention.
- la figure 4 représente les résistances à l'arrachement de différents montages d'une pièce métallique dans une pièce en matériau composite réalisés grâce au procédé selon l'invention.

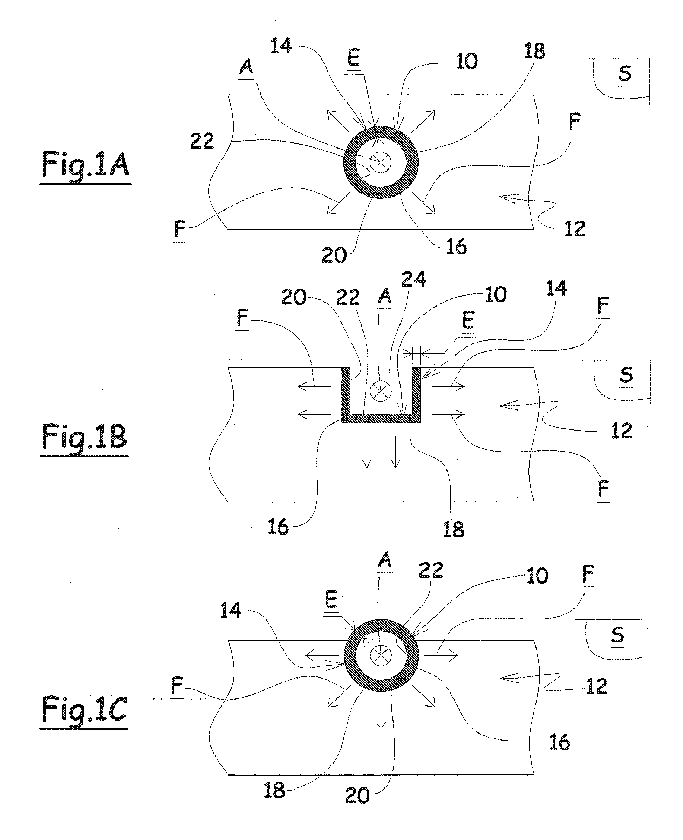

Comme illustré sur les figures 1A, 1B et 1C, l'invention concerne un procédé de montage d'une pièce 10 métallique, représentée dans un plan transversal sur lesdites figures, dans une pièce 12 en matériau composite.

Le procédé selon l'invention est particulièrement destiné à renforcer et à augmenter la durée de vie d'une liaison d'une pièce en matériau composite appartenant à un sous-ensemble d'aéronef.

Plus précisément, il s'agit d'un procédé de montage d'une pièce 10 métallique dans un logement 14 de réception prévu à cet effet dans une pièce 12 en matériau composite.

A cet effet, le logement 14 de réception a un profil intérieur 20 sensiblement conjugué au contour extérieur 18 d'une partie 16 de la pièce 10 métallique, ladite partie 16 venant en contact avec le matériau composite.

Selon l'invention, la pièce 10 métallique peut comprendre d'autres parties reliées à la partie 16 et venant ou non en contact avec la pièce 12 en matériau composite, ou, au contraire, ladite pièce 10 métallique peut uniquement consister en ladite partie 16.

Dans une première étape, le procédé de montage selon l'invention prévoit de pré-enduire de colle C la partie 16 de ladite pièce 10 métallique avant de l'introduire dans le logement 14 de réception, la colle C pouvant recouvrir tout ou partie du contour extérieur 18 de ladite partie 16.

Dans une deuxième étape, après introduction de la partie 16 dans le logement 14, le procédé de montage selon l'invention consiste à expanser le contour extérieur 18 de la partie 16 dans le logement 14 de la pièce 12 en matériau composite.

Selon le mode de réalisation de l'invention, le logement 14 de réception et la partie 16 de la pièce 10 métallique sont disposés selon un axe longitudinal A sensiblement perpendiculaire au plan de stratification S du matériau composite de façon que les efforts issus de l'expansion soient dans ledit plan de stratification S.

De plus, l'expansion du contour extérieur 18 est réalisée de manière à ne pas engendrer ou à limiter les dommages dans le matériau composite autour du logement 14 de réception.

Dans un mode de réalisation préféré de l'invention, et comme représenté sur les figures 1A à 1C, la partie 16 de ladite pièce 10 métallique est creuse et comprend une paroi intérieure 22 de forme sensiblement identique au contour extérieur 18, ladite paroi intérieure 22 et ledit contour extérieur 18 étant séparés par l'épaisseur E de la partie 16 de la pièce 10 métallique.

Toujours dans un mode de réalisation préféré, un outil d'expansion, notamment un brunissoir, est introduit dans la partie 16 de ladite pièce 10 métallique après sa mise en place dans le logement 14 de réception.

Afin d'obtenir l'expansion du contour extérieur 18 dans le logement 14 de réception, l'outil d'expansion comprend par exemple une section transversale variable sur sa longueur et de forme sensiblement identique à la paroi intérieure 22 de la partie 16 de la pièce 10 métallique.

Par la suite, ledit outil d'expansion est introduit dans ladite partie 16 creuse par son extrémité de plus petite section et un effort est appliqué sur ledit outil de manière à faire le faire pénétrer dans ladite partie creuse, l'augmentation de la section de l'outil permettant d'appliquer progressivement une pression répartie sur la paroi intérieure 22 et dirigée vers l'extérieur, comme l'illustrent les flèches F.

L'utilisation d'un outil d'expansion à section variable est cité à titre d'exemple, d'autres solutions connues de l'homme du métier existent, comme par exemple la compression de la partie 16 de la pièce 10 dans sa longueur à la manière d'un rivetage. La solution la plus appropriée dépendant de la liaison à renforcer, le choix entre les différentes solutions est laissé à l'homme du métier.

Avantageusement, des parties 16 métalliques de différentes sections transversales peuvent être montées à l'aide du procédé selon l'invention dans un logement 14 de réception d'une pièce 12 en matériau composite.

Ainsi, dans un mode de réalisation préféré de l'invention, la partie 16 de la pièce 10 métallique est creuse et de contour extérieur 18 fermé, comme illustré sur les figures 1A et 1C, ledit contour extérieur 18 se présentant sous forme d'une surface continue.

Avec un contour extérieur 18 fermé, l'expansion latérale, dans le cas d'un contour 18 sensiblement polygonal, ou radiale, dans le cas d'un contour 18 sensiblement circulaire, de la partie 16 métallique est mieux maîtrisée et donc la déformation de ladite partie 16 dans le logement 14 de la pièce 12 en matériau composite est plus homogène.

Selon un autre mode de réalisation de l'invention, illustré en figure 1B, et pour les besoins de certaines liaisons comme par exemple des glissières, ladite partie 16 métallique peut être creuse et de contour extérieur 18 semi-ouvert, la paroi intérieure 22 et le contour extérieur 18 se présentant sous la forme de surfaces discontinues laissant au moins une ouverture longitudinale 24 dans la partie 16 de ladite pièce 10 métallique.

Comme représenté sur les figures 1A à 1C, le logement 14 de réception de la pièce 12 en matériau composite peut lui aussi prendre plusieurs formes.

Dans un mode de réalisation préféré de l'invention, illustré en figure 1A, le logement 14 de réception de la pièce 10 métallique est de profil intérieur 20 fermé.

De cette manière, la pièce 12 en matériau composite entoure entièrement la partie 16 métallique, favorisant ainsi une répartition homogène de la déformation de la partie 16 dans le logement 14 de réception et améliorant la résistance aux efforts d'arrachement, en traction/compression et en rotation, de la liaison entre la partie 16 et la pièce 12 en matériau composite.

Cependant, dans un autre mode de réalisation de l'invention, et notamment dans le cas précité de la réalisation de certaines liaisons telles des glissières dans une pièce en matériau composite, ledit logement 14 de réception est de profil intérieur 20 semi-ouvert, comme illustré par les figures 1B et 1C, la partie 16 métallique pouvant éventuellement être introduite dans ledit logement latéralement.

Comme précisé dans le préambule, la présente invention s'attache plus particulièrement à renforcer et améliorer les caractéristiques mécaniques des liaisons comprenant au moins un alésage réalisé dans une pièce en matériau composite.

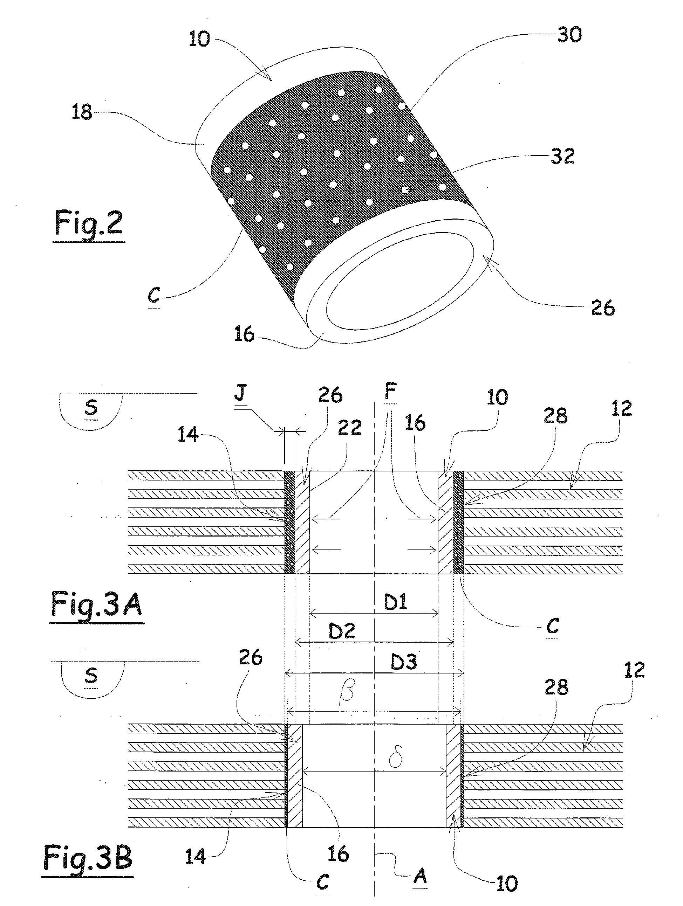

A cet effet, dans un mode de réalisation préféré du procédé de montage d'une pièce métallique dans une pièce en matériau composite selon l'invention, et comme illustré sur les figures 2, 3A et 3B, la partie 16 de la pièce 10 métallique prend la forme d'une bague 26 et le logement 14 de la pièce 12 en matériau composite prend la forme d'un alésage 28 dans lequel est introduite ladite bague 26.

Avant montage, le contour extérieur 18 de la bague 26 est pré-enduit de colle C, l'alésage 28 étant réalisé avec un jeu J suffisamment important afin de pouvoir introduire ladite bague 26 pré-enduite de colle C sans difficulté, de préférence manuellement.

Selon l'invention, la colle C utilisée comprend un liant 30 dans lequel se trouvent au moins une résine et au moins un catalyseur, au moins un de ces deux produits étant contenu dans des microcapsules 32.

De préférence, le catalyseur est contenu dans les microcapsules 32, de 20 à 30 microns pour donner un ordre d'idées, et la résine se trouve dans le liant.

Avantageusement, un solvant, notamment du toluène, est contenu dans le liant afin d'assurer une certaine viscosité de la colle C destinée à permettre l'enduction de la bague 26 par trempage, par coulage ou à la brosse.

La bague 26 enduite de colle C est ensuite séchée à température ambiante ou en étuve de façon à engendrer l'évaporation du solvant et fixer la colle C.

La colle C ainsi déposée peut demeurer inerte sur une longue période. Ceci permet une pré-enduction des bagues 26 lors d'une fabrication en série par exemple. Dès leur séchage effectué, lesdites bagues 26 pré-enduites peuvent être emballées, expédiées et stockées sans perte de performances, pendant au moins une année pour donner un ordre idées.

Lors du montage de la bague métallique 26 dans l'alésage 28, la colle C est donc inerte, ne causant aucune difficulté de manipulation à l'opérateur et aucun débordement ou contamination des pièces environnantes.

Par la suite, lors de l'utilisation de l'outil d'expansion, l'expansion radiale du contour extérieur 18 de la bague 26 dans l'alésage 28 brise les microcapsules et provoque ainsi la réaction chimique entre la résine et le catalyseur.

Plus généralement, dans le procédé selon l'invention, l'expansion latérale du contour extérieur 18 de la partie 16 de la pièce 10 métallique dans le logement 14 de réception de la pièce 12 en matériau composite provoque la polymérisation de la colle C.

Une fonction importante de l'expansion de la bague 26 dans le procédé de montage selon l'invention est de briser la plus grande proportion, idéalement la totalité, des microcapsules.

Selon deux variantes de réalisation du montage selon l'invention, la bague 26 décrite ci-dessus peut avoir une surface extérieure lisse ou bien moletée afin d'améliorer encore la résistance aux efforts d'arrachement en rotation.

Ledit moletage permet d'améliorer l'accrochage mécanique entre la colle C et la pièce 10 métallique, l'adhésion de la colle C avec un matériau composite étant généralement meilleure que l'adhésion de la colle C avec du métal.

Selon l'invention, on applique une pression répartie sur la paroi intérieure 22 de la bague 26, ladite pression étant dirigée vers l'alésage 28 comme l'illustrent les flèches F, pour déformer et expanser ladite bague 26 dans ledit alésage 28.

Avant expansion, la bague 26 possède un diamètre intérieur D1 et un diamètre extérieur D2, l'alésage a un diamètre D3, avec D2 inférieur à D3 en raison du jeu J permettant l'introduction de la bague 26 pré-enduite de colle C.

A l'aide de l'outil d'expansion, le procédé de montage selon l'invention prévoit de réaliser une expansion δ du diamètre intérieur D1 entraînant une plastification du matériau dans la partie interne de l'épaisseur E de la bague 26.

Avantageusement, ladite plastification entraîne une meilleure tenue en fatigue du montage réalisé grâce au procédé selon l'invention.

La plastification de la partie interne de l'épaisseur E introduit des contraintes résiduelles dans le matériau de ladite bague 26. Ces contraintes entraînent une expansion β du diamètre extérieur D2, ladite expansion β déterminant les efforts d'expansion radiaux appliqués par la bague 26 contre la paroi de l'alésage 28.

Plus précisément, le procédé de montage selon l'invention prévoit de réaliser une expansion δ du diamètre intérieur D1 susceptible d'entraîner une expansion β du diamètre extérieur D2 au moins égale au diamètre D3 si ladite expansion δ est réalisée sans avoir monté ladite bague 26 dans l'alésage 28, c'est-à-dire sans efforts d'opposition appliqués par la pièce 12 en matériau composite contre les efforts d'expansion de la bague 26 au niveau de l'alésage 28.

Ainsi, l'objectif du procédé de montage selon l'invention est de faire varier l'expansion δ du diamètre intérieur D1 afin d'ajuster les efforts d'expansion de la bague 26 et les efforts d'opposition de la pièce 12 en matériau composite en fonction des propriétés mécaniques du matériau de ladite bague 26 et du matériau composite.

Aussi, dans une première variante de réalisation du procédé selon l'invention visant à éviter tout endommagement, notamment la délamination, de la pièce 12 en matériau composite, l'expansion δ du diamètre intérieur D1 est telle que l'expansion β du diamètre extérieur D2 entraîne des efforts d'opposition non nuls appliqués par la pièce 12 en matériau composite contre les efforts d'expansion de la bague 26 au niveau de l'alésage 28 et que les efforts d'expansion sont sensiblement égaux aux efforts d'opposition appliqués par la pièce 12 en matériau composite au niveau de l'alésage 28 sans que D3 varie sensiblement.

Et, dans une deuxième variante de réalisation du procédé selon l'invention, l'expansion δ du diamètre intérieur D1 est telle que l'expansion β du diamètre extérieur D2 entraîne des efforts d'opposition non nuls appliqués par la pièce 12 en matériau composite contre les efforts d'expansion de la bague 26 au niveau de l'alésage 28 et que les efforts d'expansion sont sensiblement supérieurs aux efforts d'opposition appliqués par la pièce 12 en matériau composite au niveau de l'alésage 28 sans que D3 varie sensiblement.

Selon cette deuxième variante de réalisation, des contraintes sont créées dans le matériau composite autour dudit logement 14 de réception en plus des contraintes résiduelles créées dans la bague 26, ce qui permet d'augmenter les caractéristiques mécaniques du montage, notamment la résistance aux efforts d'arrachement, en traction/compression et en rotation.

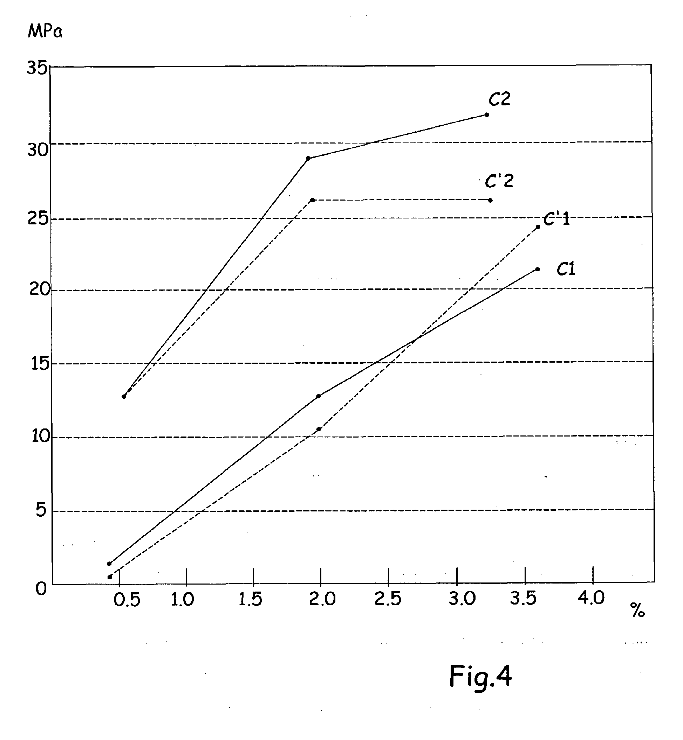

A titre d'exemple, la figure 4 illustre l'évolution, lors d'essais réels, des résistances à l'arrachement des deux variantes de réalisation du montage selon l'invention, avec une bague lisse ou moletée, en fonction de l'augmentation du facteur d'expansion du diamètre intérieur D1 de la bague 26.

Plus précisément, les courbes C1 et C1' correspondent aux résistances à l'arrachement, respectivement sous un effort et sous un couple d'arrachement, d'une bague métallique à surface extérieure lisse, ladite bague étant collée et expansée dans une pièce en matériau composite selon l'invention.

Les courbes C2 et C2' correspondent aux résistances à l'arrachement, respectivement sous un effort et sous un couple d'arrachement, d'une bague métallique à surface extérieure moletée, ladite bague étant collée et expansée dans une pièce en matériau composite selon l'invention.

Les résistances à l'arrachement sont mesurées en mégapascals (MPa) pour différents facteurs d'expansion du diamètre intérieur D1 .

Le facteur d'expansion correspond, en pourcentage, à l'augmentation maintenue du diamètre D1 après le passage et le retrait de l'outil d'expansion.

On constate donc que la résistance à l'arrachement augmente fortement avec l'augmentation du facteur d'expansion.

Il apparaît donc qu'en associant les effets d'un collage à ceux d'un montage en interférence, le procédé selon l'invention permet de réaliser un montage d'une pièce métallique dans une pièce en matériau composite possédant de meilleures caractéristiques mécaniques, notamment un meilleur transfert des charges radiales et axiales, que les montages obtenus avec les procédés de l'art antérieur utilisant seulement le collage.

De plus, l'expansion radiale de la bague 26 permet avantageusement de centrer ladite bague dans l'alésage 28 sans aucun montage spécifique, contrairement aux procédés de collage de l'art antérieur dans lesquels le jeu diamétral laissé pour l'épaisseur du joint de colle nécessitait des procédures de montage spécifique pour maîtriser la position de la bague dans l'alésage.

Lors d'une expansion de la partie 16, ou une bague 26, induisant une déformation du profil intérieur 20 du logement 14, ou d'un alésage 28, des dommages, notamment une légère délamination, peuvent être causés dans le matériau composite à proximité dudit logement 14. Avantageusement, ces dommages peuvent être immédiatement compensés lors de ladite expansion de la partie 16, ou de la bague 26, par une infiltration et une polymérisation de la colle C.

Pour donner un ordre d'idées, afin de ne pas diminuer la résistance de la pièce 12 en matériau composite et donc la performance de l'assemblage, l'expansion maintenue du diamètre intérieur D1 est de préférence inférieure à 5 % de sa valeur nominale.

On constate donc que l'efficacité du procédé de montage selon l'invention est basée sur la connaissance des comportements et des propriétés mécaniques de la partie 16 de la pièce 10 métallique et du matériau composite de la pièce 12 autour du logement 14.

Ainsi, le procédé de montage selon l'invention s'appuie sur une modélisation de différents phénomènes physiques : déformation de la bague 26 et de la pièce 12 en matériau composite, plastification de la bague 26, endommagement du matériau composite, frottement entre l'outil d'expansion et la bague 26, compression de la colle C avant et pendant la polymérisation, ...

Les méthodes de modélisation du comportement mécanique des matériaux s'améliorant constamment et les résultats des simulations s'affinant grâce à l'augmentation des capacités de calcul, le procédé de montage d'une pièce métallique dans un matériau composite selon l'invention peut être adapté et optimisé pour de nombreuses utilisations, y compris pour les plus exigeantes comme l'utilisation d'une pièce en matériau composite dans un sous-ensemble d'aéronef.

Ainsi, le procédé de montage selon l'invention offre une facilité de mise en oeuvre et la possibilité de moduler le niveau d'expansion afin de s'adapter à la géométrie de la pièce en matériau composite, notamment pour pouvoir certifier l'assemblage dans un domaine tel que l'aéronautique.

Bien entendu, l'invention couvre tout assemblage d'une pièce métallique dans une pièce en matériau composite réalisé ou inspiré à partir du procédé de montage qui vient d'être décrit, dans l'application qui a servi d'exemple à cette description ou dans toute autre application.

Notamment, l'invention couvre l'assemblage d'une bague métallique à collerette dans un alésage d'une pièce en matériau composite, ce type d'assemblage étant fréquemment utilisé.

Il est évident que le procédé de montage qui vient d'être décrit peut aussi être adapté au montage d'une pièce non métallique possédant des comportements élastique et plastique, dans une pièce en matériau composite ou métallique, ledit matériau composite pouvant être un matériau dit complexe.

## Revendications

1. Procédé de montage d'une pièce (10) métallique dans une pièce (12) en matériau composite, appartenant notamment à un sous-ensemble d'aéronef, ladite pièce (10) métallique comprenant au moins une partie (16) creuse et comprenant une paroi intérieure (22) de forme identique à son contour extérieur (18), ladite paroi intérieure (22) et ledit contour extérieur (18) étant séparés par l'épaisseur E de la partie (16), ladite partie (16) étant pré-enduite de colle C et ladite pièce (12) en matériau composite comprenant au moins un logement (14) de réception de profil intérieur (20) conjugué au contour extérieur (18) de la partie (16) de la pièce (10) métallique, **caractérisé en ce que** le procédé de montage prévoit de réaliser une expansion δ de la paroi intérieure (22) de la partie (16) entraînant une expansion β de son contour extérieur et déterminant les efforts d'expansion appliqués par la partie (16) contre la paroi du logement (14), le logement (14) de réception et la partie (16) de la pièce (10) métallique étant disposés selon un axe longitudinal A sensiblement perpendiculaire au plan de stratification S du matériau composite de façon que les efforts issus de l'expansion soient dans ledit plan de stratification S.

2. Procédé de montage d'une pièce métallique dans une pièce (12) en matériau composite selon la revendication 1, **caractérisé en ce que** l'expansion δ de la paroi intérieure (22) entraîne une plastification de la partie interne de l'épaisseur E de la partie (16) et introduit des contraintes résiduelles dans le matériau de la partie (16) entraînant l'expansion β et déterminant les efforts d'expansion appliqués par la partie (16) contre la paroi du logement (14).

3. Procédé de montage d'une pièce (10) métallique dans une pièce (12) en matériau composite selon la revendication 1 ou 2, **caractérisé en ce que** la partie (16) de la pièce (10) métallique prend la forme d'une bague (26) et le logement (14) de la pièce (12) en matériau composite prend la forme d'un alésage (28) dans lequel est introduite ladite bague (26) pré-enduite de colle *C*.

4. Procédé de montage d'une pièce (10) métallique dans une pièce (12) en matériau composite selon la revendication 3, la bague (26) possédant un diamètre intérieur D1 et un diamètre extérieur D2, l'alésage ayant un diamètre D3, avec D2 inférieur à D3 en raison du jeu J permettant l'introduction de la bague (26) pré-enduite de colle *C*, **caractérisé en ce que** l'expansion δ du diamètre intérieur D1 est telle que l'expansion β du diamètre extérieur D2 entraîne des efforts d'opposition non nuls appliqués par la pièce (12) en matériau composite contre les efforts d'expansion de la bague (26) au niveau de l'alésage (28) et que les efforts d'expansion sont égaux aux efforts d'opposition appliqués par la pièce (12) en matériau composite au niveau de l'alésage (28) sans que D3 varie.

5. Procédé de montage d'une pièce (10) métallique dans une pièce (12) en matériau composite selon la revendication 3, la bague (26) possédant un diamètre intérieur D1 et un diamètre extérieur D2, l'alésage ayant un diamètre intérieur D3, avec D2 inférieur à D3 en raison du jeu J permettant l'introduction de la bague (26) pré-enduite de colle *C*, **caractérisé en ce que** l'expansion δ du diamètre intérieur D1 est telle que l'expansion β du diamètre extérieur D2 entraîne des efforts d'opposition non nuls appliqués par la pièce (12) en matériau composite contre les efforts d'expansion de la bague (26) au niveau de l'alésage (28) et que les efforts d'expansion sont supérieurs aux efforts d'opposition appliqués par la pièce (12) en matériau composite au niveau de l'alésage (28) sans que D3 varie.

6. Procédé de montage d'une pièce (10) métallique dans une pièce (12) en matériau composite selon l'une des revendications 3 à 5, **caractérisé en ce que** la bague (26) a une surface extérieure moletée.

7. Procédé de montage d'une pièce (10) métallique dans une pièce (12) en matériau composite selon l'une des revendications précédentes, **caractérisé en ce qu'**un outil d'expansion est introduit dans ladite partie (16) métallique pour réaliser l'expansion du contour extérieur (18) de ladite partie (16).

8. Procédé de montage d'une pièce (10) métallique dans une pièce (12) en matériau composite selon l'une des revendications précédentes, **caractérisé en ce que** la colle *C* utilisée comprend un liant (30) dans lequel se trouvent au moins une résine et au moins un catalyseur, au moins un de ces deux produits étant contenu dans des microcapsules (32), et **en ce que** l'expansion du contour extérieur (18) de la partie (16) dans le logement (14) libère le produit contenu dans des microcapsules (32) et provoque la polymérisation de la colle *C* par réaction chimique entre la résine et le catalyseur.

## Patentansprüche

1. Montageverfahren eines metallischen Teils (10) in einem Teil (12) aus Verbundmaterial, das insbesondere zu einer Untereinheit eines Luftfahrzeugs gehört, wobei das metallische Teil (10) wenigstens einen hohlen Bereich (16) aufweist, der eine Innenwand (22) umfasst, deren Form mit dessen äußeren Umriss (18) identisch ist, wobei die Innenwand (22) und der äußere Umriss (18) durch die Dicke E des Bereichs (16) getrennt sind und der Bereich (16) mit Kleber C vorbeschichtet ist und das Teil (12) aus Verbundmaterial wenigstens eine Aufnahme (14) mit einem inneren Profil (20) in Übereinstimmung mit dem äußeren Umriss (18) des Bereich (16) des metallischen Teils (10) aufweist, **dadurch gekennzeichnet, dass** das Montageverfahren vorsieht, eine Erweiterung δ der Innenwand (22) des Bereichs (16) zu bewerkstelligen, die eine Erweiterung β von dessen äußerem Umriss bewirkt und die vom Bereich (16) gegen die Wand der Aufnahme (14) ausgeübten Erweiterungskräfte bestimmt, wobei die Aufnahme (14) und der Bereich (16) des metallischen Teils (10) entlang einer Längsachse A angeordnet sind, die im Wesentlichen im rechten Winkel zur Schichtungsebene S des Verbundmaterials derart ausgerichtet ist, dass die durch die Erweiterung vorgerufenen Kräfte in der Schichtungsebene S auftreten.

2. Montageverfahren eines metallischen Teils in einem Teil (12) aus Verbundmaterial nach Anspruch 1, **dadurch gekennzeichnet, dass** die Erweiterung δ der Innenwand (22) eine Plastifizierung des inneren Bereichs der Dicke E des Bereichs (16) bewirkt und Eigenspannungen im Material des Bereichs (16) hervorruft, die die Erweiterung β bewirken und die die vom Bereich (16) gegen die Wand der Aufnahme (14) ausgeübten Erweiterungskräfte bestimmen.

3. Montageverfahren eines metallischen Teils (10) in einem Teil (12) aus Verbundmaterial nach Anspruch 1 oder 2, **dadurch gekennzeichnet, dass** der Bereich (16) des metallischen Teils (10) die Gestalt eines Rings (26) einnimmt und dass die Aufnahme (14) des Teils (12) aus Verbundmaterial die Gestalt einer Durchführung (28) einnimmt, in die der mit Kleber C vorbeschichtete Ring (26) eingeführt wird.

4. Montageverfahren eines metallischen Teils (10) in einem Teil (12) aus Verbundmaterial nach Anspruch 3, wobei der Ring (26) einen Innendurchmesser D1 und einen Außendurchmesser D2 aufweist und die Durchführung einen Durchmesser D3 hat, wobei D2 kleiner als D3 ist, im Hinblick auf ein Spiel J, das die Einführung des mit einem Kleber C vorbeschichteten Rings (26) gestattet, **dadurch gekennzeichnet, dass** die Erweiterung δ des Innendurchmessers D1 derart ist, dass die Erweiterung β des Außendurchmessers D2 nicht Null betragende Gegenkräfte hervorruft, die durch das Teil (12) aus Verbundmaterial gegen die Erweiterungskräfte des Rings (26) im Bereich der Durchführung (28) erzeugt werden, und dass die Erweiterungskräfte gleich den Gegenkräften sind, die vom Teil (12) aus Verbundmaterial im Bereich der Durchführung (28) hervorgerufen werden, ohne dass sich D3 ändert.

5. Montageverfahren eines metallischen Teils (10) in einem Teil (12) aus Verbundmaterial nach Anspruch 3, wobei der Ring (26) einen Innendurchmesser D1 und einen Außendurchmesser D2 aufweist und die Durchführung einen Innendurchmesser D3 hat, wobei D2 kleiner als D3 ist, im Hinblick auf ein Spiel J, das die Einführung des mit einem Kleber C vorbeschichteten Rings (26) gestattet, **dadurch gekennzeichnet, dass** die Erweiterung δ des Innendurchmessers D1 derart ist, dass die Erweiterung β des Außendurchmessers D2 nicht Null betragende Gegenkräfte hervorruft, die durch das Teil (12) aus Verbundmaterial gegen die Erweiterungskräfte des Rings (26) im Bereich der Durchführung (28) erzeugt werden, und dass die Erweiterungskräfte größer als die Gegenkräfte sind, die vom Teil (12) aus Verbundmaterial im Bereich der Durchführung (28) ausgeübt werden, ohne dass sich D3 ändert.

6. Montageverfahren eines metallischen Teils (10) in einem Teil (12) aus Verbundmaterial nach einem der Ansprüche 3 bis 5, **dadurch gekennzeichnet, dass** der Ring (26) eine gerändelte äußere Oberfläche hat.

7. Montageverfahren eines metallischen Teils (10) in einem Teil (12) aus Verbundmaterial nach einem der vorhergehenden Ansprüche, **dadurch gekennzeichnet, dass** ein Erweiterungswerkzeug in den metallischen Bereich (16) eingeführt wird, um die Erweiterung des äußeren Umrisses (18) des Bereichs (16) zu bewerkstelligen.

8. Montageverfahren eines metallischen Teils (10) in einem Teil (12) aus Verbundmaterial nach einem der vorhergehenden Ansprüche, **dadurch gekennzeichnet, dass** der verwendete Kleber C ein Bindemittel (30) aufweist, in dem sich wenigstens ein Harz und wenigstens ein Katalysator befindet, wobei wenigstens einer der beiden Produkte in Mikrokapseln (32) enthalten ist und dass die Erweiterung des äußeren Umrisses (18) des Bereichs (16) in der Aufnahme (14) das in den Mikrokapseln (32) enthaltene Produkt freisetzt und eine Polymerisierung des Klebers C durch eine chemische Reaktion zwischen dem Harz und dem Katalysator hervorruft.

## Claims

1. Process for mounting a metal part (10) in a composite material part (12) that belongs in particular to an aircraft subassembly, whereby said metal part (10) comprises at least one hollow portion (16) and comprises an inside wall (22) that is identical in shape to its outside contour (18), whereby said inside wall (22) and said outside contour (18) are separated by the thickness E of the portion (16), whereby said portion (16) is pre-coated by glue C and said composite material part (12) comprises at least one housing (14) for receiving the inside profile (20) that is a mirror image of the outside contour (18) of the portion (16) of the metal part (10), **characterized in that** the mounting process calls for ensuring an expansion δ of the inside wall (22) of the portion (16) that gives rise to an expansion β of its outside contour and that determines the expansion forces applied by the portion (16) against the wall of the housing (14). The housing (14) and the portion (16) of the metal part (10) being placed along a longitudinal axis A, nearly perpendicular to the composite material stratification plan S in order that strains due to the expansion are in said stratification plan S.

2. Process for mounting a metal part in a composite material part (12) according to claim 1, wherein the expansion δ of the inside wall (22) gives rise to a plasticization of the internal portion with thickness E of the portion (16) and introduces residual stresses into the material of the portion (16) that gives rise to the expansion β and determines the expansion forces that are applied by the portion (16) against the wall of the housing (14).

3. Process for mounting a metal part (10) in a composite material part (12) according to claim 1 or 2, wherein the portion (16) of the metal part (10) assumes the shape of a ring (26) and the housing (14) of the composite material part (12) assumes the shape of a hole (28) into which said ring (26) that is pre-coated by glue C is inserted.

4. Process for mounting a metal part (10) in a composite material part (12) according to claim 3, whereby the ring (26) has an inside diameter D1 and an outside diameter D2, the hole has a diameter D3, with D2 less than D3 because of the play J that allows the insertion of the ring (26) that is pre-coated by glue C, wherein the expansion δ of the inside diameter D1 is such that the expansion β of the outside diameter D2 gives rise to non-zero opposition forces that are applied by the composite material part (12) against the expansion forces of the ring (26) at the hole (28) and wherein the expansion forces are equal to the opposition forces that are applied by the composite material part (12) at the hole (28) without D3 varying.

5. Process for mounting a metal part (10) in a composite material part (12) according to claim 3, whereby the ring (26) has an inside diameter D1 and an outside diameter D2, whereby the hole has an inside diameter D3, with D2 less than D3 because of the play J that allows the insertion of the ring (26) that is pre-coated by glue C, wherein the expansion δ of the inside diameter D1 is such that the expansion β with the outside diameter D2 gives rise to non-zero opposition forces that are applied by the composite material part (12) against the expansion forces of the ring (26) at the hole (28) and wherein the expansion forces are greater than the opposition forces that are applied by the composite material part (12) at the hole (28) without D3 varying.

6. Process for mounting a metal part (10) in a composite material part (12) according to one of claims 3 to 5, wherein the ring (26) has a knurled outside surface.

7. Process for mounting a metal part (10) in a composite material part (12) according to one of the preceding claims, wherein an expansion tool is inserted into said metal portion (16) for ensuring the expansion of the outside contour (18) of said portion (16).

8. Process for mounting a metal part (10) in a composite material part (12) according to one of the preceding claims, wherein process for mounting a metal part (10) in a composite material part (12) according to one of the preceding claims, wherein the glue C as used comprises a binder (30) in which there are found at least one resin and at least one catalyst, whereby at least one of these two products is contained in microcapsules (32) and wherein the expansion of the outside contour (18) of the portion (16) into the housing (14) releases the product included in microcapsules and causes the polymerization of the glue C.
